# EUROPÄISCHE PATENTSCHRIFT

(11) **EP 0 775 092 B1**
(45) Veröffentlichungstag und Bekanntmachung des Hinweises auf die Patenterteilung: **12.05.1999**
(21) Anmeldenummer: 95928504.0
(22) Anmeldetag: 31.07.1995
(51) Int. Cl.: C02F 1/64, C02F 1/72, C02F 5/08

(54) **VERWENDUNG VON HYDROGENSULFAT ALS SÄUREKOMPONENTE IN VERBINDUNG MIT WASSERSTOFFPEROXID ZUR REINIGUNG VON TRINKWASSERVERSORGUNGSEINRICHTUNGEN**
USE OF HYDROGEN SULPHATE AS THE ACID CONSTITUENT IN CONJUNCTION WITH HYDROGEN PEROXIDE FOR THE CLEANING OF DRINKING-WATER SUPPLY EQUIPMENT
UTILISATION DE SULFATE D'HYDROGENE COMME CONSTITUANT ACIDE CONJOINTEMENT AVEC DU PEROXYDE D'HYDROGENE POUR EPURER DES INSTALLATIONS D'ALIMENTATION EN EAU POTABLE

(30) Priorität: 08.08.1994 DE 4428027
(43) Veröffentlichungstag der Anmeldung: 28.05.1997
(73) Patentinhaber: R. SPÄNE KG, 79618 Rheinfelden (DE)
(72) Erfinder: KLINK, Kurt, D-79395 Neuburg (DE); SPÄNE, Rainer, D-79618 Rheinfelden (DE)
(74) Vertreter: Andrae, Steffen, Dr.
(86) Internationale Anmeldenummer: EP9503052
(87) Internationale Veröffentlichungsnummer: WO9605143

(56) Entgegenhaltungen:
- EP-A- 0 183 894
- WO-A-84/02125
- FR-A- 2 294 134

## Beschreibung

Die Erfindung betrifft Verfahren zur Entfernung mangan- und/oder eisenhaltiger Verockerungen und/oder Versinterungen aus Trinkwasserversorgungseinrichtungen mit Hilfe von wässrigen Behandlungszusammensetzungen, die eine Säurekomponente als erste Wirkkomponente in Verbindung mit Wasserstoffperoxid oder Wasserstoffperoxid bildenden Verbindungen als zweite Wirkkomponente enthalten.

Ein derartiges Verfahren ist beschrieben in der EP-A-113 060 bzw. in dem daraus hervorgegangenen europäischen Patent. Insbesondere im Hinblick auf den technischen Hintergrund und die praktische Problematik wird zur Ergänzung der Ausführungen in der vorliegenden Anmeldung ausdrücklich auf die genannte Druckschrift verwiesen.

Wie in der genannten Druckschrift ausgeführt wird, bilden sich in Trinkwasserversorgungseinrichtungen wie Trinkwasserbehältern, Brunnen, Rohrleitungen, Filtereinrichtungen usw. aus dem aus natürlichen Quellen gewonnenen Wasser unter der Mitwirkung von Mikroorganismen als Inkrustationen bezeichnete Beläge, die eine komplizierte Feinstruktur aus einer Mischung von anorganischen Bestandteilen und organischen Bestandteilen aus der Bakterienmasse besitzen und eine erhebliche mechanische und chemische Widerstandsfähigkeit aufweisen können. Eine besonders problematische Variante der genannten Beläge sind die sogenannten biologischen Verockerungen, die unter bestimmten Voraussetzungen von Eisen- und Manganbakterien gebildet werden, die das im Wasser gelöst vorhandene zweiwertige Eisen oder zweiwertige Mangan aufnehmen und in Form von unlöslichen Eisen- und Manganverbindungen wieder ausscheiden. Derartige Verockerungen führen bei Brunnen sehr häufig zu einer erheblichen Leistungsminderung, und sie machen auch immer wieder eine Reinigung und Desinfektion von Wasserbehältern erforderlich.

Lange Zeit wurde angenommen, daß derartige Inkrustationen neben einer chemischen Behandlung stets auch eine intensive mechanische Behandlung erfordern. Die Suche nach möglichst wirksamen chemischen Substanzen zur Auflösung derartiger Inkrustationen führte dazu, daß gemäß DE-A-2 040 546 Ascorbinsäure als wirksamste von verschiedenen untersuchten organischen Säuren vorgeschlagen und verwendet wurde. Die Wirksamkeit von Ascorbinsäure stieß jedoch bei besonders hartnäckigen Inkrustationen an ihre Grenzen, und außerdem ist die Verwendung einer organischen Säure wie Ascorbinsäure, die zu einer erheblichen Erhöhung des biologischen Sauerstoffbedarfs führt, im Trinkwasserbereich wenig erstrebenswert.

Die in dem europäischen Patent EP-B2-113 060 beschriebene Erfindung einer gemeinsamen Verwendung von Salzsäure und Wasserstoffperoxid stellte daher einen erheblichen Fortschritt dar, da sich überraschenderweise gezeigt hatte, daß unter Verwendung der genannten beiden gut verfügbaren und kostengünstigen Chemikalien eine schnelle und sichere Auflösung von Inkrustationen der genannten Art sowie eine gleichzeitige gründliche Desinfektion erreicht wurde. Der Erfolg wurde als komplexes Zusammenspiel der Redox-Systeme H₂O₂/O₂, HCl/Cl₂, Mn⁴⁺/Mn²⁺ unter Beteiligung weiterer Belagbestandteile interpretiert. Insbesondere die in statu nascendi entstehenden Chlorspuren wurden als wichtiger Bestandteil zur Zerstörung der organischen Inkrustationsbestandteile und der Abtötung der unter Schleimschichten geschützten Bakterienkulturen und bei der Desinfektion angesehen.

Eine Ausgestaltung des genannten Verfahrens findet sich in der EP-A-183 894 bzw. dem daraus hervorgegangenen europäischen Patent, wo die Verwendung von festen Verbindungen wie Peroxoboraten, insbesondere von Natriumperoxoboraten oder Harnstoffperhydrat im Gemisch mit weiteren Bestandteilen gelehrt wird. Die genannten Peroxoborate bilden in saurer Lösung Wasserstoffperoxid, so daß bei ihrem Auflösen im salzsauren Medium eine Behandlungslösung gemäß EP-B2-113 060 gebildet wird.

Als weitere Bestandteile des Behandlungsmittels gemäß EP-A-183 894 werden in allgemeiner Form organische und/oder anorganische Säuren und/oder saure Salze sowie Hilfsstoffe wie Tenside, Inhibitoren und Gerüstbildner genannt. Die genannte Schrift nennt keine konkret zu verwendenden Säuren oder sauren Salze, aus den im Erteilungsverfahren eingereichten ergänzenden Versuchsberichten geht jedoch hervor, daß als Säurekomponente ausschließlich ein Gemisch aus Salzsäure, Phosphorsäure und Sulfaminsäure eingesetzt wurde. Im Zusammenhang mit dem Stand der Technik wurde als einziges saures Salz Aluminiumsulfat diskutiert.

Zum weiteren Stand der Technik wird verwiesen auf den in der EP-B2-113 060 und der EP-B1-183 894 abgehandelten, vom Gegenstand der vorliegenden Erfindung weiter abliegenden Stand der Technik. Insbesondere ist zu erwähnen die DE-A-2 520 988, wo ein zweistufiges Verfahren unter getrenntem stufenweisen Einsatz von Säure, insbesondere Sulfaminsäure, und Wasserstoffperoxid zur Entfernung von Kesselstein und/oder Schlamm aus Wärmeaustauschrohren beschrieben wird, sowie die DE-A-2 005 507, die das Gebiet der Haushaltsreiniger betrifft und zum Zwecke der Entfernung von Metalloxiden und Kesselstein bzw. einer Ablagerung von anorganischen Salzen aus hartem Wasser einen Kombination aus einer trocknen wasserlöslichen organischen Säure mit einem trocknen wasserlöslichen Alkali- oder Erdalkalisalz einer anorganischen Säure beschreibt. Die DE-A-2 005 507 beschreibt keine Entfernung der für Trinkwasserversorgungseinrichtungen typischen Beläge wie biologischen Verockerungen, und die gemäß DE-A-2 005 507 zu entfernenden Beläge sind sowohl im Hinblick auf ihre chemische Zusammensetzung als auch auf ihre Dicke und mechanische Widerstandsfähigkeit von ganz anderer Natur.

Die DE-A-2 005 507 ist dem Sachgebiet der Haushaltsreinigungsmittel zuzuordnen, bei denen in verschiedenen Zusammensetzungen zahlreiche feste Säuren und sauren Salze zur Entfernung von Kalkablagerungen oder zur Schaumentwicklung in Verbindung mit Karbonaten oder Hydrogenkarbonaten eingesetzt werden. In diesem Bereich ist es auch bekannt, als feste Säure Hydrogensulfat einzusetzen.

Haushaltsreiniger sind jedoch für die Reinigung von Trinkwasserversorgungseinrichtungen völlig ungeeignet und wirkungslos.

Obwohl das Verfahren gemäß EP-B2-113 060 in der Praxis hervorragende Ergebnisse liefert und andere Verfahren weitgehend verdrängen konnte, weist es den Nachteil auf, daß dann, wenn die Trinkwasserversorgungseinrichtungen aus Edelstahl hergestellt sind oder Edelstahlelemente enthalten, an derartigen Edelstahlteilen Korrosionserscheinungen zu beobachten sind.

Es ist somit Aufgabe der vorliegenden Erfindung, ein Verfahren zur Entfernung mangan- und/oder eisenhaltiger Verockerungen und/oder Versinterungen aus Trinkwasserversorgungseinrichtungen mit Hilfe von wässrigen Behandlungszusammensetzungen, die eine Säurekomponente als erste Wirkkomponente in Verbindung mit Wasserstoffperoxid oder wasserstoffperoxid bildenden Verbindungen als zweite Wirkkomponente enthalten, so auszugestalten, daß ohne nennenswerte Einbuße im Hinblick auf die Wirksamkeit der angestrebten Reinigung und Desinfizierung aus Edelstahl bestehende oder Edelstahlelemente enthaltende Trinkwasserversorgungseinrichtungen gereinigt werden können, ohne daß Korrosionserscheinungen beobachtet werden, wie sie bei Verwendung von Salzsäure beobachtbar sind.

Diese Aufgabe wird gemäß der Vorliegenden Erfindung dadurch gelöst, daß man in einem Verfahren der genannten Art als Säurekomponente ein Hydrogensulfat verwendet, das vorzugsweise in Form eines Alkalimetallhydrogensulfats oder als Ammomiumhydrogensulfat eingesetzt wird.

Bevorzugt ist die Verwendung von Natrium- und/oder Kaliumhydrogensulfat.

Aufgrund der Tatsache, daß ein Hydrogensulfat der genannten Art ein festes Salz darstellt, kann es für seine Verwendung in einer festen Mischung bereitgestellt werden, die durch Auflösung und Hinzufügung der zweiten Wirkkomponente in die wäßrige Behandlungszusammensetzung überführt werden kann.

Es ist jedoch auch möglich, das Hydrogensulfat von Anfang an in Form einer geeignet konzentrierten Salzlösung bereitzustellen.

Wie bei dem bekannten Verfahren kann die Behandlungszusammensetzung vor der eigentlichen Behandlung aus den Komponenten zusammengemischt werden, oder man kann eine wässrige Zusammensetzung vorlegen, beispielsweise in einem Brunnen, die entweder das Hydrogensulfat oder die zweite Wirkkomponente enthält, und die fehlende weitere Komponente anschließend zugeben und die Behandlungslösung durch Mischen in der zu reinigenden Einrichtung herstellen.

Die erfindungsgemäß einzusetzende wässrige Behandlungslösung kann neben dem Hydrogensulfat und dem Wasserstoffperoxid zusätzlich an sich bekannte organische und/oder anorganische Säuren und/oder saure Salze und/oder oxidationsbeständige hydrophile Tenside und/oder desinfizierende Zusätze enthalten.

Bei seiner Verwendung wird normalerweise so vorgegangen, daß in der Behandlungszusammensetzung ein Gehalt an Hydrogensulfat eingestellt wird, der im Bereich von 0,1 M bis 4,0 M, besonders bevorzugt bei etwa 3,85 M, liegt.

Das als zweite Wirkkomponente eingesetzte Wasserstoffperoxid kann als solches oder in Form eines Peroxosalzes eingesetzt werden, das in saurer wässriger Lösung Wasserstoffperoxid bildet.

Sowohl das Peroxosalz, das vorzugsweise Natriumperoxoborat ist, als auch das als Säurekomponente eingesetzte Hydrogensulfat können in Form ihrer bekannten stabilen Hydrate eingesetzt werden.

Überraschenderweise zeigte sich, daß sich von Edelstahlsubstraten mangan- und/oder eisenhaltige Verockerungen und/oder Versinterungen in Gegenwart von Hydrogensulfat als saurer Wirkkomponente entfernen lassen. Das ist insofern überraschend, als in einem System der genannten Art keine Chlorspuren gebildet werden können, die im Hinblick auf die Zerstörung und Entfernung der organischen Belagskomponenten als wichtig angesehen wurden.

Die Verwendung von Hydrogensulfat hat den Vorteil, daß keine den biologischen Sauerstoffbedarf erhöhenden organischen Wirkkomponenten verwendet werden müssen und daß die zu entfernenden Inkrustationen von Edelstahlsubstraten ohne erkennbare Korrosionsspuren entfernt werden können.

Die unter Verwendung von Hydrogensulfat geschaffene erfindungsgemäße Behandlungszusammensetzung beruht somit auf einem Salz, das als Anion Hydrogensulfat enthält, einer Wasserstoffperoxidkomponente und gegebenenfalls zusätzlich geringeren Mengen Hilfsstoffe (Komplexbildner, Netzmittel).

Es hat sich als Vorteil des Hydrogensulfat-Anions erwiesen, daß bei ihm im Gegensatz zu Schwefelsäure die Aggressivität der Säure ausreichend vermindert ist.

Als zusätzlicher Vorteil ergibt sich, daß bei Verwendung von Hydrogensulfat die wirksame Säurekomponente in fester Form vorliegt, wodurch sich die Möglichkeit erschließt, einen Desinfektionsreiniger für den Trinkwasser-, Rohrleitungs- und Brunnenbereich mit einem Mineralsäuregehalt in einer festen Zubereitung in Säcken abgepackt als handhabungssicheres Konzentrat anzuliefern. Die Behandlungszusammensetzung wird entweder als Lösung ab Werk geliefert oder direkt vor Gebrauch in eine wässrige Lösung überführt.

Im Zusammenwirken mit Wasserstoffperoxid oder Natriumperoxoborat löst das Produkt Verockerungen und andere Ablagerungen mühelos. Zahlreiche Untersuchungen haben gezeigt, daß Edelstahl nicht angegriffen wird, und zwar im Gegensatz zu desinfizierenden Behandlungszusammensetzungen, die Salzsäure bzw. Chloride und Wasserstoffperoxid oder Peroxoverbindungen enthalten, bei deren Verwendung schnell Korrosionsspuren auftreten können.

Auch ohne die Anwesenheit von Chlor bzw. Chlorid werden hervorragende Desinfektionsergebnisse erhalten.

Das Produkt kann nach seiner Verwendung ohne weitere Maßnahmen in einen Vorfluter oder ein Kanalnetz gespült werden.

Nachfolgend wird die Erfindung anhand eines Anwendungsbeispieles, das rein illustrativen Charakter trägt und die Erfindung nicht einschränkt, noch näher erläutert.

### Anwendungsbeispiel

Ein Trinkwasserbehälter mit Edelstahlauskleidung, der starke eisen- und manganhaltige Verockerungsbeläge aufweist, soll gereinigt und desinfiziert werden. Bei Verwendung von Behandlungszusammensetzungen auf salzsaurer Grundlage wird der Stahl angegriffen. Behandlungszusammensetzung auf der Basis organischer Säuren sind zu schwach, um die manganoxidhaltigen Inkrustationen zu lösen.

Es wurde ferner eine erfindungsgemäße Behandlungszusammensetzung untersucht, die aus zwei Komponenten bestand, nämlich einer mineralsauren Komponente 1 in Form eines Alkalihydrogensulfats, sowie einer wasserstoffperoxidhaltigen Komponente 2. Beide Komponenten wurden als wässrige Lösungen eingesetzt und so miteinander vermischt, daß die Konzentration des Hydrogensulfats in der Behandlungslösung 3,85 M betrug und die Wasserstoffperoxidkonzentration 0,5 M.

Die genannten beiden Komponenten wurden unmittelbar vor Gebrauch miteinander vermischt und als Aerosol auf den dunklen Belag auf der Behälteroberfläche des Edelstahlbehälters aufgesprüht. Innerhalb weniger Minuten löste sich der Belag. Nach etwa 10 Minuten wird die Edelstahlwand mit einem kräftigen Wasserstrahl abgespühlt. Die Lösung kann nach Verdünnung und ggf. Neutralisation sowie Bestimmung des Restperoxidgehalts in das Kanalnetz bzw. einen Vorfluter eingeleitet werden.

An den Edelstahlwänden konnten keine Korrosionsspuren festgestellt werden.

Soll die Behandlung unter Bedingungen erfolgen, bei denen mit tiefen Temperaturen und ggf. sogar Frost (Temperaturen von unter 0°C) gerechnet werden muß, besteht die Gefahr einer teilweisen Verfestigung der Behandlungszusammensetzung, wenn diese die oben beschriebene Zusammensetzung aufweist.

In einem solchen Falle ist die Behandlungszusammensetzung dahingehend zu modifizieren, daß der Gehalt an Natriumhydrogensulfat auf 1,6 M abgesenkt wird und zusätzlich 0,7 M Schwefelsäure zugesetzt werden. Die übrigen Bestandteile bleiben unverändert.

Mit der modifizierten Zusammensetzung kann der Bereich der Einsatztemperaturen auf unter 0°C erweitert werden.

## Patentansprüche

1. Verwendung von Hydrogensulfat als Säurekomponente in Verfahren zur Entfernung mangan- und/oder eisenhaltiger Verockerungen und/oder Versinterungen aus Trinkwasserversorgungseinrichtungen, die aus Edelstahl bestehen oder Edelstahlelemente enthalten, mit Hilfe von wäßrigen Behandlungszusammensetzungen, die eine Säurekomponente als erste Wirkkomponente in Verbindung mit Wasserstoffperoxid oder Wasserstoffperoxid bildenden Verbindungen als zweite Wirkkomponente enthalten.

2. Verwendung nach Anspruch 1, dadurch gekennzeichnet, daß das Hydrogensulfat in Form eines Alkalimetall- oder des Ammoniumhydrogensulfats verwendet wird.

3. Verwendung nach Anspruch 1 oder 2, dadurch gekennzeichnet, daß das Hydrogensulfat für seine Verwendung in wasserfreier Form oder als Hydrat in einer festen Mischung bereitgestellt wird, die durch Auflösen in einem wäßrigen Medium, das die zweite Wirkkomponente enthält oder dem diese nachfolgend zugesetzt wird, in die Behandlungszusammensetzung überführt wird.

4. Verwendung nach Anspruch 1 oder 2, dadurch gekennzeichnet, daß das Hydrogensulfat für seine Verwendung in Form einer wäßrigen Lösung bereitgestellt wird.

5. Verwendung nach Anspruch 1, 2, 3 oder 4, dadurch gekennzeichnet, daß die wäßrige Behandlungszusammensetzung vor dem Einbringen in die zu behandelnde Wasserversorgungseinrichtung oder in der zu behandelnden Wasserversorgungseinrichtung selbst hergestellt wird, indem eine wäßrige Zusammensetzung vorgelegt wird, die entweder das Hydrogensulfat oder die zweite Wirkkomponente enthält, und daß die fehlende weitere Komponente anschließend zugemischt wird.

6. Verwendung nach einem der Ansprüche 3 bis 5, dadurch gekennzeichnet, daß die feste Mischung oder die wäßrige Lösung zusätzlich organische und/oder anorganische Säuren und/oder saure Salze und/oder oxidationsbeständige hydrophile Tenside und/oder desinfizierende Zusätze enthält.

7. Verwendung nach einem der Ansprüche 1 bis 6, dadurch gekennzeichnet, daß der Gehalt an Hydrogensulfat in der fertigen wäßrigen Behandlungszusammensetzung im Bereich von 0,1 M bis 4,0 M, vorzugsweise 3,85 M, liegt.

8. Verwendung nach einem der Ansprüche 1 bis 7, dadurch gekennzeichnet, daß als zweite Wirkkomponente ein in saurer wäßriger Lösung Wasserstoffperoxid bildendes Peroxosalz verwendet wird.

9. Verwendung nach Anspruch 8, dadurch gekennzeichnet, daß als Peroxosalz Natriumperoxoborat in Form eines seiner handelsüblichen Hydrate verwendet wird.

10. Verwendung nach einem der Ansprüche 1 bis 9, daß die aus Edelstahl bestehende oder Edelstahlelemente enthaltende Trinkwasserversorgungseinrichtung ein Trinkwasserbehälter und/oder ein Rohrleitungssystem und/oder eine Filtereinrichtung und/oder ein Brunnen ist.

## Claims

1. Use of hydrogen sulfate as the acid component in methods for the removal of manganese- and/or iron-containing ochreous and sinter deposits from drinking water supply installations consisting of stainless steel or containing stainless steel elements by using aqueous treating compositions containing an acid component as a first active component in combination with hydrogen peroxide or hydrogen peroxide forming compounds as a second active component.

2. Use according to claim 1 characterized in that the hydrogen sulfate is used in the form of an alkali or ammonium hydrogen sulfate.

3. Use according to claim 1 or to 2 characterized in that the hydrogen sulfate to be used is provided in a solid mixture free of water or as a hydrate and said solid mixture is converted into the treating composition by dissolving it in an aqueous medium which contains the second active component or to which the latter is added later.

4. Use according to claim 1 or 2 characterized in that the hydrogen sulfate to be used is provided in the form of an aqueous solution.

5. Use according to claim 1, 2, 3 or 4 characterized in that the aqueous treating composition is prepared prior to being introduced into the water supply installation to be treated or is prepared directly in the water supply installation to be treated by first providing an aqueous composition containing either the hydrogen sulfate or the second active component and then admixing the remaining further component.

6. Use according to any of claims 3 to 5 characterized in that the solid mixture or the aqueous solution, in addition, contains organic and/or inorganic acids and/or acid salts and/or oxidation resistant hydrophilic surfactants and/or disinfecting additives.

7. Use according to any of claims 1 to 6 characterized in that the amount of hydrogen sulfate in the prepared aqueous treating composition is in the range of from 0,1 M to 4,0 M, preferably 3,85 M.

8. Use according to any of claims 1 to 7 characterized in that as second active component a peroxosalt is used which in an aqueous acid solution forms hydrogen peroxide.

9. Use according to claim 8 characterized in that as said peroxosalt sodium peroxoborate in the form of one of its commercially available hydrates is used.

10. Use according to any of claims 1 to 9 wherein the drinking water supply installation consisting of stainless steel or containing stainless steel elements is a drinking water reservoir and/or a piping system and/or a filter installation and/or a well.

## Revendications

1. Application de sulfate d'hydrogène en tant que composante acide dans un procédé pour l'élimination des incrustations ocrées et/ou des dépositions contenant du manganèse et/ou du fer hors d'installations d'alimentation d'eau potable qui sont constituées en acier inoxydable ou qui comprennent des éléments en acier inoxydable, à l'aide de compositions de traitement aqueuses qui contiennent une composante acide en tant que première composante active en liaison avec du peroxyde d'hydrogène ou des composés formant du peroxyde d'hydrogène en tant que seconde composante active.

2. Application selon la revendication 1, caractérisée en ce que le sulfate d'hydrogène est appliqué sous forme d'un sulfate d'hydrogène de métal alcalin ou d'ammonium.

3. Application selon l'une ou l'autre des revendications 1 et 2, caractérisée en ce que pour son application le sulfate d'hydrogène est préparé sous forme anhydre ou sous forme d'hydrate dans un mélange solide qui est transformé dans la composition de traitement par dissolution dans un fluide aqueux qui contient la seconde composante active ou auquel cette composante active est ajoutée ensuite.

4. Application selon l'une ou l'autre des revendications 1 et 2, caractérisée en ce que pour son application le sulfate d'hydrogène est préparé sous forme d'une solution aqueuse.

5. Application selon l'une quelconque des revendications 1, 2, 3 ou 4, caractérisée en ce que la composition de traitement aqueuse est préparée avant l'introduction dans l'installation d'alimentation d'eau à traiter ou bien est préparée dans l'installation d'alimentation d'eau à traiter elle-même, en fournissant une composition aqueuse qui contient soit le sulfate d'hydrogène soit la seconde composante active, et en ce que l'autre composante manquante est ajoutée ensuite.

6. Application selon l'une quelconque des revendications 3 à 5, caractérisée en ce que le mélange solide ou la solution aqueuse contient en supplément des acides organiques et/ou inorganiques et/ou des sels acides et/ou des agents tensioactifs hydrophiles résistants à l'oxydation et/ou des additifs désinfectants.

7. Application selon l'une quelconque des revendications 1 à 6, caractérisée en ce que la teneur en sulfate d'hydrogène dans la composition de traitement aqueuse finie est de l'ordre de 0,1 M à 4,0 M, de préférence de 3,85 M.

8. Application selon l'une quelconque des revendications 1 à 7, caractérisée en ce que l'on utilise comme seconde composante active un sel peroxo formant du peroxyde d'hydrogène dans une solution aqueuse acide.

9. Application selon la revendication 8, caractérisée en ce que l'on utilise en tant que sel peroxo du perborate de sodium sous forme de l'un de ses hydrates commerciaux.

10. Application selon l'une quelconque des revendications 1 à 9, caractérisée en ce que l'installation d'alimentation d'eau potable constituée en acier inoxydable ou comprenant des éléments en acier inoxydable est un réservoir d'eau potable et/ou un système de conduites tubulaires et/ou un dispositif de filtrage et/ou un puits.
